# EUROPEAN PATENT SPECIFICATION

(11) **EP 3 188 534 B1**
(45) Date of publication and mention of the grant of the patent: **27.11.2019**
(21) Application number: 15835516.4
(22) Date of filing: 26.08.2015
(51) Int. Cl.: H04W 36/00, H04W 56/00

(54) **USER DEVICE, AND OFFSET REPORTING METHOD**
BENUTZERVORRICHTUNG UND VERSATZMELDEVERFAHREN
DISPOSITIF D'UTILISATEUR ET PROCÉDÉ DE COMPTE-RENDU DE DÉCALAGE

(30) Priority: 27.08.2014 JP 2014173263
(43) Date of publication of application: 05.07.2017
(73) Proprietor: NTT DOCOMO, INC., Chiyoda-ku Tokyo 100-6150 (JP)
(72) Inventor: TAKAHASHI, Hideaki, Tokyo 100-6150 (JP); UCHINO, Tooru, Tokyo 100-6150 (JP); HAPSARI, Wuri Andarmawanti, Tokyo 100-6150 (JP)
(74) Representative: Hoffmann Eitle
(86) International application number: PCT/JP2015/074004
(87) International publication number: WO 2016/031855

(56) References cited:
- WO-A1-2016/007269
- US-A1- 2003 007 470
- US-A1- 2012 069 798
- US-A1- 2013 242 829
- INTEL CORPORATION: "Discussion on SFN timing difference in Dual connectivity", 3GPP DRAFT; R4-143028, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Seoul, Korea; 20140519 - 20140523 18 May 2014 (2014-05-18), XP050797797, Retrieved from the Internet: URL:http://www.3gpp.org/ftp/Meetings_3GPP_ SYNC/RAN4/Docs/ [retrieved on 2014-05-18]
- RAN3 (NEC): "Introduction of Dual Connectivity (RAN3 topics)", 3GPP DRAFT; R2-144027_R3-141966, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dresden, Germany; 20140818 - 20140822 26 August 2014 (2014-08-26), XP050820279, Retrieved from the Internet: URL:http://www.3gpp.org/ftp/tsg_ran/WG2_RL 2/TSGR2_87/Docs/ [retrieved on 2014-08-26]
- HUAWEI ET AL.: 'Discussion on MGP configuration of unsynchronized case for dual connectivity' 3GPP TSG-RAN WG4 MEETING #72 R4- 144495 pages 1 - 4, XP050799079 Retrieved from the Internet: <URL:http://www.3gpp.org/ftp/tsg_ran/WG4_ Radio/TSGR4_72/Docs/R4-144495.zip>
- HUAWEI: 'Report and summary of email discussion [86#29][LTE/DC] RRM measurements' 3GPP TSG-RAN WG2 MEETING #87 R2- 143808 21 August 2014, pages 29 - 31, XP050794742 Retrieved from the Internet: <URL:http://www.3gpp.org/ftp/tsg_ran/WG2_RL 2/ TSGR2_87/Docs/R2-143808.zip> [retrieved on 2015-11-06]
- NOKIA NETWORKS ET AL.: 'RRM measurements for Dual Connectivity' 3GPP TSG- RAN WG2 MEETING #87 R2-143482 08 August 2014, pages 1 - 3, XP050794491 Retrieved from the Internet: <URL:http://www. 3gpp.org/ftp/tsg_ran/WG2_RL2/TSGR2_87/Docs/ R2- 143482.zip> [retrieved on 2015-11-06]
- ERICSSON: 'Measurements in dual connectivity' 3GPP TSG-RAN WG2 MEETING #87 R2-143438 08 August 2014, pages 1 - 3, XP050794458 Retrieved from the Internet: <URL:http://www. 3gpp.org/ftp/tsg_ran/WG2_RL2/TSGR2_87/Docs/ R2- 143438.zip> [retrieved on 2015-11-06]
- "SFN handling and SI change for SCG in Dual Connectivity", 3GPP DRAFT; R2-142117 SFN HANDLING AND SI CHANGE OF SCG IN DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Seoul, Korea; 20140519 - 20140523 18 May 2014 (2014-05-18), XP050793348, Retrieved from the Internet: URL:http://www.3gpp.org/ftp/Meetings_3GPP_ SYNC/RAN2/Docs/ [retrieved on 2014-05-18]

## Description

### TECHNICAL FIELD

The present invention relates to a measurement control technique in a mobile communication system such as LTE. More particularly, the present invention relates to a technique for measuring a difference of a radio frame between a plurality of asynchronous base stations.

### BACKGROUND ART

In the LTE system, carrier aggregation (CA : Carrier Aggregation) for performing communication by simultaneously using a plurality of carriers is adopted, in which predetermined bandwidths (20 MHz at the maximum) are used as basic units. In carrier aggregation, a carrier which is a basic unit is called a component carrier (CC: component carrier).

When CA is performed, a PCell (Primary cell) that is a reliable cell for ensuring connectivity and an SCell (Secondary cell) that is an appendant cell are set for the user apparatus UE. The user apparatus UE connects to a PCell first, and then, an SCell can be added as necessary. The PCell is a cell similar to an independent cell for supporting RLM (Radio Link Monitoring) and SPS (Semi-Persistent Scheduling) and the like.

The SCell is a cell which is set in the user apparatus UE by being added to the PCell. Addition and deletion of the SCell is performed by RRC (Radio Resource Control) signaling. Since an SCell is in a deactivated state right after it is set in the user apparatus UE, communication becomes available (scheduling becomes available) only by activating it.

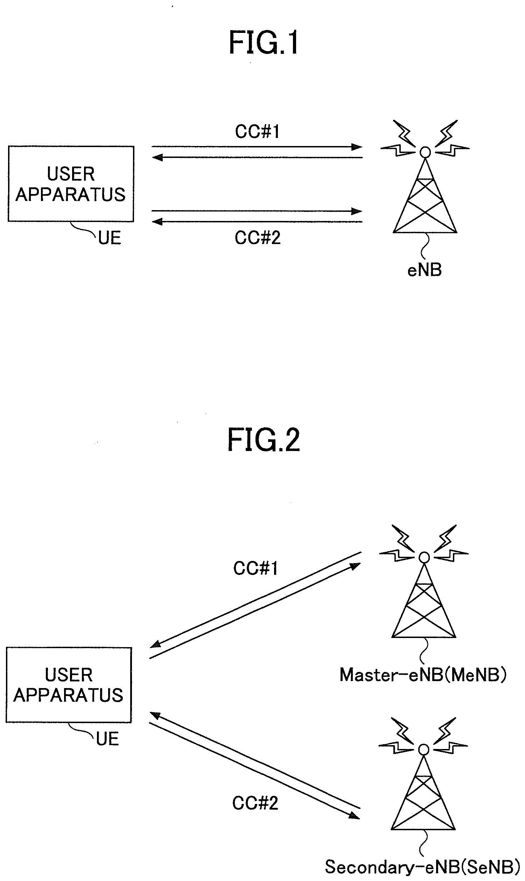

As shown in Fig. 1, in CA up to 3GPP release 10 ("3GPP release" is abbreviated to "Rel" hereinafter), a plurality of CCs under the same base station eNB are used.

On the other hand, in Rel-12, this is expanded so that Dual connectivity is proposed in which simultaneous communication is performed by using CCs under different base stations eNB to realize high throughputs (non-patent document 1). That is, in Dual connectivity, the UE performs communication simultaneously using radio resources of two physically different base stations eNB.

Dual connectivity is a kind of CA, and it is also referred to as Inter eNB CA (inter base station carrier aggregation), in which Master-eNB (MeNB) and Secondary-eNB (SeNB) are introduced. Fig. 2 shows an example of Dual connectivity. In the example of Fig. 2, the MeNB communicates with a user apparatus UE by CC#1, and the SeNB communicates with the user apparatus UE by CC#2, so that Dual connectivity (DC, hereinafter) is realized.

In DC, a cell group formed by cell(s) (one or a plurality of cells) under an MeNB is called MCG (Master Cell Group), and a cell group formed by cell(s) (one or a plurality of cells) under an SeNB is called SCG (Secondary Cell Group). An UL CC is set in at least one SCell in an SCG, and PUCCH is set in one of the SCells. The SCell is called PSCell (primary SCell).

### RELATED ART DOCUMENT

### [NON PATENT DOCUMENT]

[NON PATENT DOCUMENT 1] 3GPP TR 36.842 V12.0.0 (2013-12)
[NON PATENT DOCUMENT 2] 3GPP TS 36.331 V12.2.0 (2014-06)

INTEL CORPORATION: "Discussion on SFN timing difference in Dual connectivity", 3GPP DRAFT; 18 May 2014 relates to SFN timing difference in dual connectivity. In particular, the document discusses various options for obtaining offset between base stations, including a network based option and a UE option. In the latter option, the SeNB requests "SCG modification request" to the UE, thus triggering the calculation, at the UE, of the SFN and the subframe time differences between MCG and SCG.

### [PATENT DOCUMENTS]

US 2012/069798 A1 relates misalignment of subframes between a first and second downlink with one another. An RNC provides an RRC message to a UE to associate particular subframes with one another. Further, the RNC provides a message to the cells transmitting the downlink signals, so that the cells can associate the HARQ acknowledgment message with the appropriate subframe. Still further, additional signaling provides for changing the set of associated subframes when needed due to a drift in the timing offset between cells.

WO 2016/007269 A1 relates to reporting difference in timing between cells using multiple connectivity in a wireless network. Accordingly, a first connection served by a first cell and a second connection served by a second cell are established to facilitate communicating with the first cell and the second cell. Then, a reporting configuration specifying one or more parameters related to reporting a timing difference between cells is received. A timing difference between the first cell and the second cell is determined, and the timing difference is reported to the first cell over the first connection or to the second cell over the second connection.

US 2003/007470 A1 relates to time-align transmissions from multiple base stations to a terminal in a CDMA communication system. To achieve time alignment, differences between the arrival times of transmissions from the base stations, as observed at the terminal, are determined and

provided to the system and used to adjust the timing at the base stations such that terminal-specific radio frames arrive at the terminal within a particular time window.

"SFN handling and SI change for SCG in Dual Connectivity", 3GPP DRAFT; R2-142117SFN, 18 May 2014 relates to SFN handling and SI change for SCG in Dual Connectivity.

### SUMMARY OF THE INVENTION

### PROBLEM TO BE SOLVED BY THE INVENTION

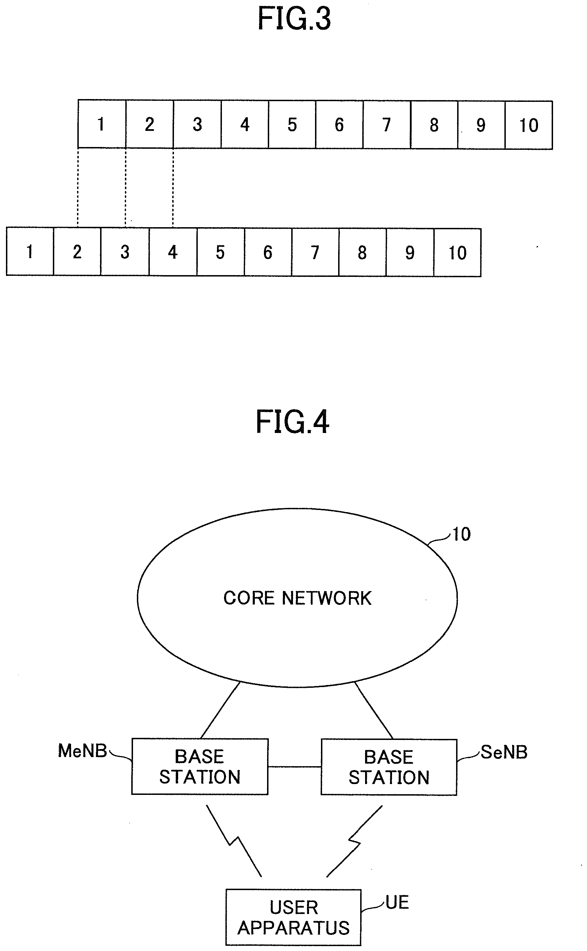

In the above-mentioned DC, the specification is being considered such that it operates even when base stations are asynchronous. Because of being asynchronous, it is assumed that an SFNs (System Frame Number) and subframes do not match between different base stations that form the DC. For example, as shown in Fig. 3, a gap occurs in which, at a certain time, in a case where a subframe received from a base station (example: MeNB) is a subframe 1, a subframe received from another base station (SeNB) is a timing between 2 and 3.

By the way, a measurement gap that causes a user apparatus UE to perform different frequency measurement and the like and DRX intended to decrease battery consumption and the like are set based on SFN/subframe.

In a case where SFN/subframe that becomes a reference of setting of the measurement gap and/or the DRX does not match between a plurality of base stations, there is a problem in that the measurement gap and/or the DRX may not be properly set for the user apparatus UE.

In DC of the Rel-12 specification, it is presupposed that the network side ascertains a timing difference of subframes between base stations. For example, a method can be considered in which an operation server (O&M) for managing parameters and operation status of base stations obtain a subframe timing difference between two base stations to report it to each base station. However, in order to properly set SFN/subframe of the measurement gap and/or the DRX, it is necessary to know a timing difference of SFN/subframe observed in the user apparatus UE. Since the timing difference observed in the user apparatus UE includes a delay difference of the propagation route from the base stations, there is a problem in that the timing difference observed in the user apparatus UE cannot be ascertained correctly by the solution in the network side using the operation server.

Therefore, a mechanism is being considered in which, when base stations that form DC are asynchronous, the user apparatus UE obtains MIB of the base stations (MeNB, SeNB), and measures a difference of SFN/subframe between both base stations so as to report it to a base station. However, there is no concrete technique on what signaling to use for causing the user apparatus UE to perform measurement and to report an offset (difference). Thus, there is a problem in that, in an actual mobile communication system, there is a possibility in that the user apparatus UE cannot properly measure and report an offset.

The present invention is contrived in view of the above-mentioned points, and an object of the present invention is to provide a technique, in a mobile communication system in which a user apparatus performs communication with a plurality of base stations by dual connectivity, that enables the user apparatus to properly report, to a base station, an offset between radio frames of a plurality of base stations.

### MEANS FOR SOLVING THE PROBLEM

The object of the invention is achieved by the subject-matter of the independent claims. Advantageous embodiments are defined in the dependent claims. Further examples are provided for facilitating the understanding of the invention.

According to an example of the present invention, there is provided a user apparatus including a function for performing communication with a plurality of base stations by dual connectivity, including:
measurement means configured, in a state where the user apparatus is not performing communication by the dual connectivity, to receive measurement configuration information, from a base station that forms a serving cell of the user apparatus, for instructing to report an offset indicating a difference between a radio frame in a measurement target cell and a radio frame in the serving cell, and to measure the offset according to the measurement configuration information; and
measurement reporting means configured to report the offset measured by the measurement means to the base station that forms the serving cell.

According to an example of the present invention, there is provided a user apparatus including a function for performing communication with a plurality of base stations that includes a first base station and a second base station by dual connectivity, including:
measurement means configured, in a state where the user apparatus performs communication by the dual connectivity, to receive measurement configuration information, from the first base station, for instructing to report an offset indicating a difference between a radio frame in a cell formed by the first base station and a radio frame in a cell formed by the second base station, and to measure the offset according to the measurement configuration information; and
measurement reporting means configured to report the offset measured by the measurement means to the first base station.

According to an example of the present invention, there is provided an offset reporting method executed by a user apparatus including a function for performing communication with a plurality of base stations by dual connectivity, including:
a measurement step of, in a state where the user apparatus is not performing communication by the dual connectivity, receiving measurement configuration information, from a base station that forms a serving cell of the user apparatus, for instructing to report an offset indicating a difference between a radio frame in a measurement target cell and a radio frame in the serving cell, and measuring the offset according to the measurement configuration information; and
a measurement reporting step of reporting the offset measured by the measurement step to the base station that forms the serving cell.

According to an example of the present invention, there is provided an offset reporting method executed by a user apparatus including a function for performing communication with a plurality of base stations that includes a first base station and a second base station by dual connectivity, including:
a measurement step of, in a state where the user apparatus performs communication by the dual connectivity, receiving measurement configuration information, from the first base station, for instructing to report an offset indicating a difference between a radio frame in a cell formed by the first base station and a radio frame in a cell formed by the second base station, and measuring the offset according to the measurement configuration information; and
a measurement reporting step of reporting the offset measured by the measurement step to the first base station.

### EFFECT OF THE PRESENT INVENTION

According to an example of the present invention, there is provided a technique, in a mobile communication system in which a user apparatus performs communication with a plurality of base stations by dual connectivity, that enables the user apparatus to properly report, to a base station, an offset between radio frames of a plurality of base stations.

### BRIEF DESCRIPTION OF THE DRAWINGS

Fig. 1 is a diagram showing CA up to Rel-10;
Fig. 2 is a diagram showing an example of Dual connectivity;
Fig. 3 is a diagram for explaining a difference of SFN/subframe;
Fig. 4 is a block diagram of a communication system in an embodiment of the present invention;
Fig. 5 is a diagram showing a sequence of processing in a first embodiment;
Fig. 6 is a diagram showing a sequence of processing in a second embodiment;
Fig. 7 is a diagram showing a change example of a 3GPP specification;
Fig. 8 is a diagram showing a change example of a 3GPP specification;
Fig. 9 is a diagram showing a change example of a 3GPP specification;
Fig. 10 is a diagram showing a change example of a 3GPP specification;
Fig. 11 is a diagram showing a change example of a 3GPP specification;
Fig. 12 is a diagram showing a change example of a 3GPP specification;
Fig. 13 is a diagram showing a change example of a 3GPP specification;
Fig. 14 is a diagram showing a change example of a 3GPP specification;
Fig. 15 is a diagram showing a change example of a 3GPP specification;
Fig. 16 is a diagram showing a change example of a 3GPP specification;
Fig. 17 is a block diagram of a user apparatus; and
Fig. 18 is a block diagram of a base station.

### EMBODIMENTS FOR CARRYING OUT THE INVENTION

In the following, an embodiment of the present invention is described with reference to figures. The embodiment described below is merely an example, and the embodiment to which the present invention is applied is not limited to the embodiment below. Although the present embodiment is targeted for a mobile communication system of LTE, the present invention can be applied not only to LTE but also to other mobile communication systems. Also, in the specification and the claims, the term "LTE" is used to mean Rel-12 of 3GPP, or schemes after Rel-12 unless otherwise stated.

### (System configuration)

Fig. 4 is a diagram showing a configuration example of a communication system in an embodiment of the present invention. As shown in Fig. 4, the communication system includes a base station MeNB and a base station SeNB each being connected to a core network 10, which enable performing DC (Dual connectivity) with a user apparatus UE. Communication is available between the base station MeNB and the base station SeNB by an X2 interface, for example.

In the communication system shown in Fig. 4, for example, a PCell and an SCell (including PSCell) can be set in which MCG is a macro cell and an SCG is a small cell. SCell (including PSCell) addition, deletion, setting change and the like at the user apparatus UE are performed by an RRC signaling from the base station MeNB. But, it is not limited to this. In the following, the base station MeNB and the base station SeNB are described as MeNB and SeNB respectively.

Although the configuration shown in Fig. 4 is common for the first and the second embodiments, as described later, the first embodiment is targeted for a state before an SeNB is added (a state before DC is configured). In the following, when the user apparatus UE communicates with a single base station, the base station is also called an MeNB.

### (On measurement)

In the present embodiment, by expanding a mechanism of an existing measurement, the MeNB causes the user apparatus UE to report an SFN/subframe offset. Thus, first, a basic matter on the existing measurement is described. Details of the existing measurement are described in the non-patent document 2.

For example, the user apparatus UE measures reception quality of downlink of a neighbor cell (example : a cell that becomes a PSCell), and reports the measurement result to the MeNB, so that the MeNB can perform addition and the like of an SeNB.

The MeNB performs configuration (measurement configuration) for the user apparatus UE on what to measure (RSRP,RSRQ and the like) by which frequency, and on what condition (periodic, event based) to perform result reporting including what information, and the like. This configuration is performed, by the MeNB, by transmiting an RRC message (RRCConnectionReconfiguration message) including measurement configuration information to the user apparatus UE.

The measurement configuration information transmitted from the MeNB to the user apparatus UE by the RRC message includes a measurement object, reporting configuration information (reporting configuration) and a measurement ID (Measurement identity) and the like.

The measurement object includes a target to measure such as a frequency (EARFCN) and a measurement bandwidth and the like that become measurement targets. As to the frequency, the measurement object includes only one frequency. The reporting configuration information includes a trigger for reporting (event based, periodic and the like), measurement/reporting amount (RSRP, RSRQ and the like) and the like. The measurement ID is an ID for associating the measurement object with the reporting configuration information.

### (First embodiment)

Next, the first embodiment of the present invention is described. In the first embodiment, in a state where the user apparatus UE is not configured with DC, a signaling is executed so as to obtain an SFN/subframe offset between a specific cell, of a different frequency, that is not a serving cell and the serving cell.

The SFN/subframe offset includes information that means, for example, as to an offset between a cell 1 and a cell 2, "SFN of the cell 1 advances by 3 radio frames compared with SFN of the cell 2", "the subframe of the cell 1 advances by X subframes compared with the subframe of the cell 2" or the like. The user apparatus UE can obtain these pieces of information by system information (MIB and the like) received from the cell 1 and the cell 2.

More specifically, in the present embodiment, a mechanism of reportCGI in existing periodical measurement is extended, so that the MeNB causes the user apparatus UE to obtain and report an SFN/subframe offset.

The existing reportCGI is a mechanism in which the MeNB designates a PCI (a physical cell ID) of a specific cell for the user apparatus UE to cause the user apparatus UE to report a CGI (Cell Global ID) of the cell, in which periodical measurement instruction and reportCGI as the purpose are designated from the MeNB so that the reporting of the CGI is performed. The CGI is an identifier that can uniquely identify a cell in the whole world, and is information broadcasted from each cell by SIB 1.

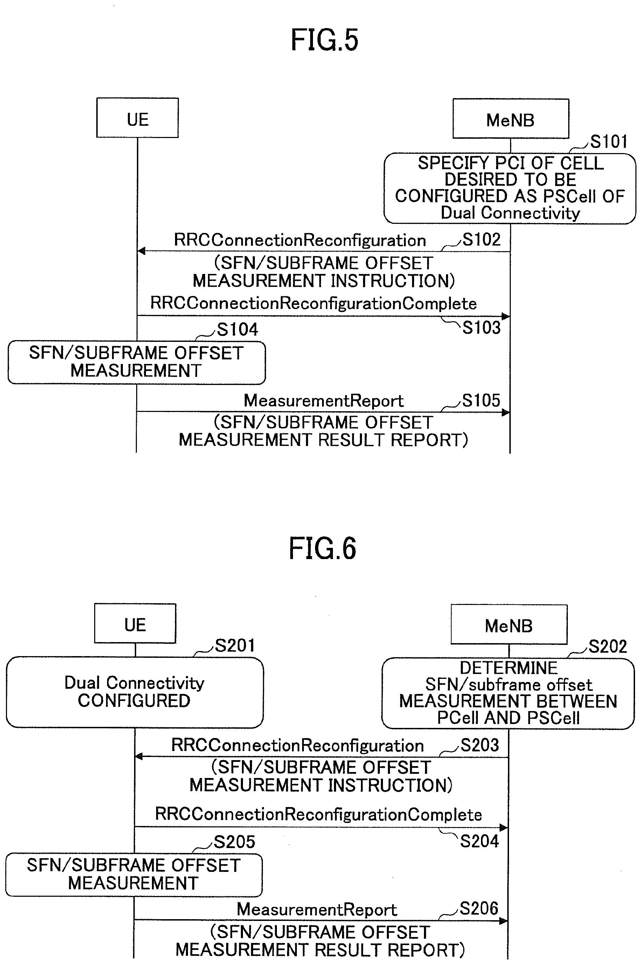

A sequence example of processing in the present embodiment is described with reference to Fig. 5. In the example of Fig. 5, the MeNB specifies a PCI of a cell that is desired to be configured as a PSCell of DC to the user apparatus UE based on a measurement result and the like of a neighbor cell already received from the user apparatus UE, for example (step 101).

Next, the MeNB transmits, to the user apparatus UE, an SFN/subframe offset reporting (measurement) instruction and the like by an RRCConnectionReconfiguration message (step 102).

The message of step 102 includes a PCI of a measurement target cell (a cell that the MeNB desires to set as a PSCell in the present embodiment) that is a target to measure an offset for the serving cell (PCell) of the MeNB, and an SFN/subframe offset reporting instruction.

More specifically, the PCI of the measurement target cell is designated by a cellForWhichToReportSFN-Offset IE in a measurement object for a frequency of the cell (a cell that the MeNB desires to set as a PSCell).

Also, the SFN/subframe offset reporting instruction is performed by a new cause of "sfn-RequestForDC" instructing SFN/subframe offset reporting, in addition to periodical measurement and reportCGI.

In step 103, RRCConnectionReconfigurationComplete is returned from the user apparatus UE to the MeNB.

In step 104, the user apparatus UE autonomously sets a measurement gap for measuring a target cell in accordance with the instruction received in step 102 to obtain MIB of the target cell, and measures an SFN/subframe offset between the target cell and the serving cell (PCell).

Then, the user apparatus UE transmits, to the MeNB, a measurement report including the measurement result of the SFN/subframe offset (step 105). More specifically, the measurement report includes offsets (differences) of SFN and subframe between the PCell of the MeNB and the target cell.

In the first embodiment, on the reportCGI, there are following option 1 and option 2 depending on difference of whether a procedure for obtaining a CGI is performed or not.

In the option 1, the before mentioned cause "sfn-RequestForDC" is added to the reportCGI that causes to report a CGI by reading SIB1. In the option 1, the user apparatus UE performs obtaining and reporting of a CGI, and in addition to that, performs measurement and reporting of the SFN/subframe offset.

In the option 2, a new cause of "reportCGI and sfn-RequestForDC" is designated in step 102 of Fig. 5. The user apparatus UE that receives the designation of "reportCGI and sfn-RequestForDC" omits the procedure of obtaining a CGI by reading SIB1, and performs measurement/reporting of the SFN/subframe offset. That is, in this case, even when reportCGI that is instruction information for instructing to report a CGI is included, obtaining of the CGI is not performed, but measurement of the SFN/subframe offset is performed. Concrete specification description examples on the option 1 and the option 2 are described later.

In the present embodiment, the reason for causing the user apparatus UE to measure the SFN/subframe offset by adding "sfn-RequestForDC" to reportCGI is that, by doing like this, the change amount of the specification becomes relatively small. Small amount of change of the specification means that implementation change amount from a current user apparatus UE becomes small. Thus, according to the technique of the present embodiment, the measurement and reporting function of the SFN/subframe offset can be implemented to the user apparatus UE relatively easily.

### (Second embodiment)

Next, the second embodiment of the present invention is described. In the second embodiment, in a state where the user apparatus UE is configured with DC, a signaling is executed so as to obtain an SFN/subframe offset between a PCell and a PSCell.

More specifically, in the present embodiment, a mechanism of reportStrongestCell in the existing periodical measurement is extended so that the MeNB causes the user apparatus UE to obtain the SFN/subframe offset.

The existing reportStrongestCell is a mechanism for the MeNB to cause the user apparatus UE to report a neighbor cell of high received power, in which a periodic measurement instruction and reportStrongestCell as the purpose are designated from the MeNB, so that measurement and reporting of a neighbor cell of high received power are performed.

A sequence example of processing in the present embodiment is described with reference to Fig. 6. In the example of Fig. 6, an SeNB addition configuration procedure has already been executed, so that the user apparatus UE is performing DC with the MeNB (PCell) and the SeNB (PSCell) (step 201).

In step 202, the MeNB determines to cause the user apparatus UE to perform SFN/subframe offset measurement (and reporting) between the PCell and the PSCell. Although the trigger of the determination is not limited to a specific one, for example, the trigger can be considered to be a case where, after DC is configured, there is no SFN/subframe offset (a case where the first embodiment is not performed), a case where a predetermined period has elapsed from the previous SFN/subframe offset measurement, or the like.

Next, the MeNB transmits, to the user apparatus UE, an SFN/subframe offset reporting (measurement) instruction and the like by an RRCConnectionReconfiguration message (step 203).

The message of step 203 includes the new cause of sfn-RequestForDC for instructing reporting of an SFN/subframe offset in addition to periodical measurement and reportStrongestCell. By including the sfn-RequestForDC in addition to periodical measurement and reportStrongestCell, it becomes an instruction to cause the user apparatus UE to measure and report the SFN/subframe offset between the PCell and the PSCell.

In step 204, RRCConnectionReconfigurationComplete is returned from the user apparatus UE to the MeNB.

In step 205, the user apparatus UE obtains MIB of each of the configured PCell and PSCell to measure the SFN/subframe offset in accordance with the instruction received in step 203.

Then, the user apparatus UE transmits, to the MeNB, a measurement report including the measurement result of the SFN/subframe offset (step 205). More specifically, the measurement report includes an offset of SFN and an offset of subframe between the PCell and the PSCell.

In the present embodiment, the reason for causing the user apparatus UE to measure the SFN/subframe offset by adding "sfn-RequestForDC" to reportStrongestCell is that, by doing like this, the change amount of the specification becomes relatively small. Small amount of change of the specification means that implementation change amount from a current user apparatus UE becomes small. Thus, according to the technique of the present embodiment, the measurement and reporting function of the SFN/subframe offset can be implemented to the user apparatus UE relatively easily.

### (3GPP specification change example)

In the following, as a more concrete example in the first and the second embodiments described so far, change examples from the current specification (non-patent document 2: 3GPP TS 36.331) are shown. These change examples are examples and parts. Also, figures described in the following are figures showing an excerpt of parts including a change in the specification. Also, an underlined part indicates a changed part.

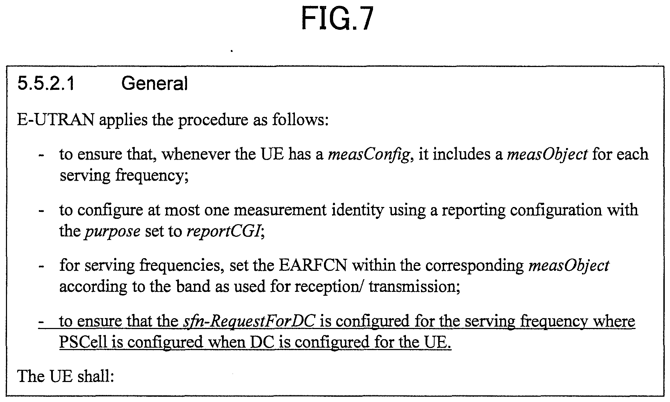

Fig. 7 shows a changed part in "5.5.2.1 General". The part shows that "sfn-RequestForDC" is configured for the serving frequency where a PSCell is configured when DC is configured in the second embodiment.

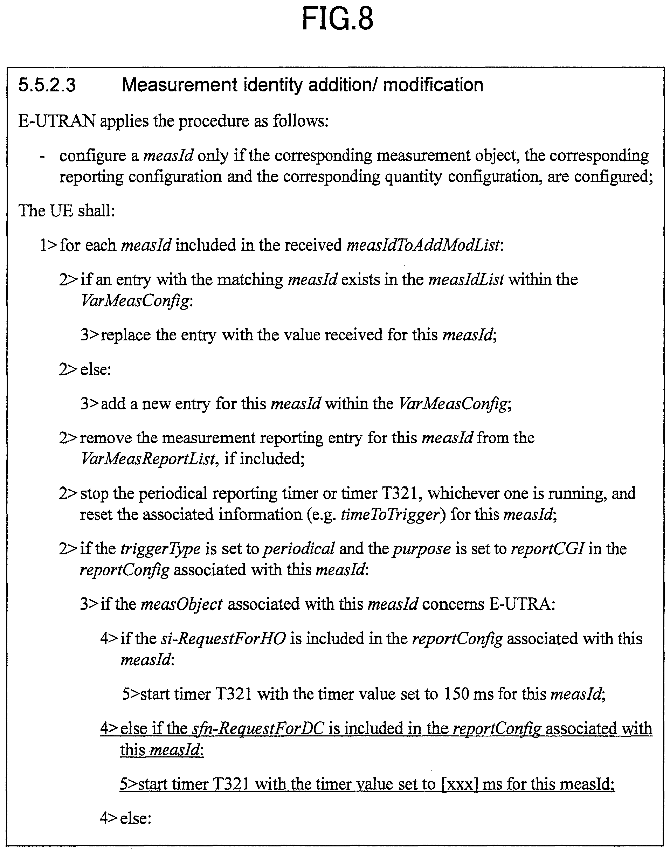

Fig. 8 shows a changed part in "5.5.2.3 Measurement identity addition/modification". The part indicates to start a measurement timer (T321) for a corresponding measID when "sfn-RequestForDC" is included in the reportConfig in the first embodiment.

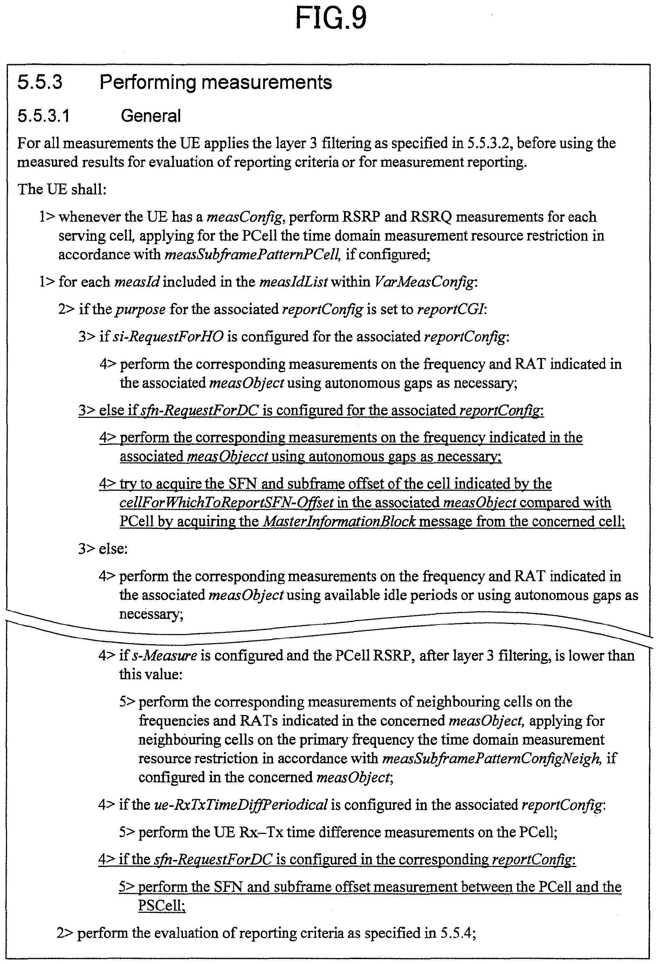

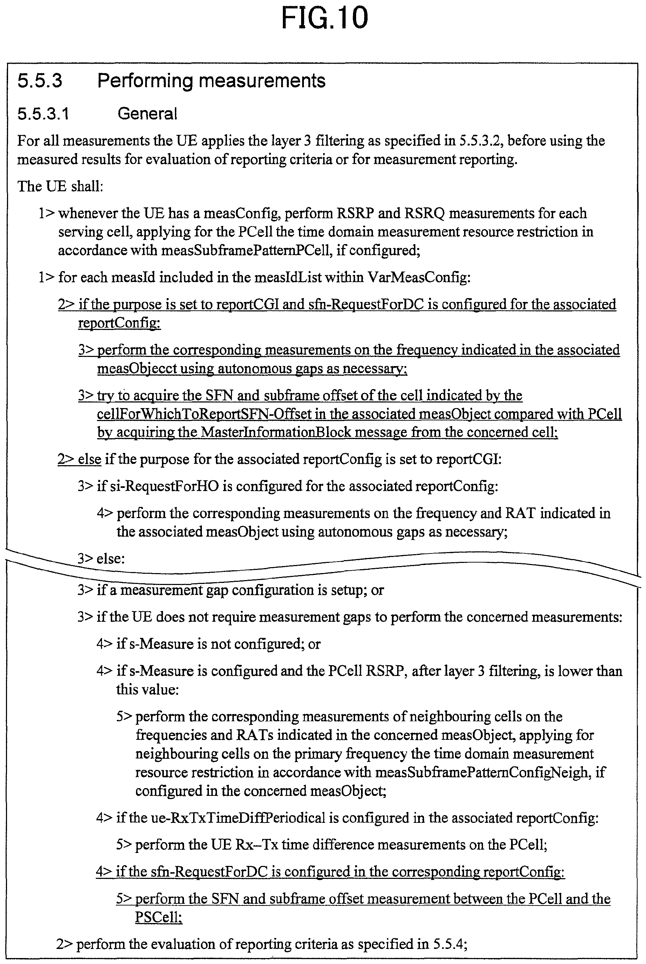

Fig. 9 and Fig. 10 indicate changed parts in "5.5.3.1 General". The first underlined part of Fig. 9 corresponds to the option 1 of the first embodiment. The part indicates to obtain an SFN/subframe offset between a cell indicated by "cellForWhichToReportSFN-Offset" and a PCell when "sfn-RequestForDC" is configured for the reportConfig in a case where the purpose of the reportConfig is reportCGI.

The first underlined part of Fig. 10 corresponds to the option 2 of the second embodiment. The part indicates to obtain an SFN/subframe offset between a cell indicated by "cellForWhichToReportSFN-Offset" and a PCell when the purpose of reportCGI is set as "reportCGI and sfn-RequestForDC". When "reportCGI and sfn-RequestForDC" is set, obtaining and reporting of a CGI are not performed.

The second underlined parts in Fig. 9 and Fig. 10 indicate to obtain an SFN/subframe offset between the PCell and the PSCell when "sfn-RequestForDC" is configured in the reportConfig when the purpose of the reportConfig is not the reportCGI or the like in the second embodiment.

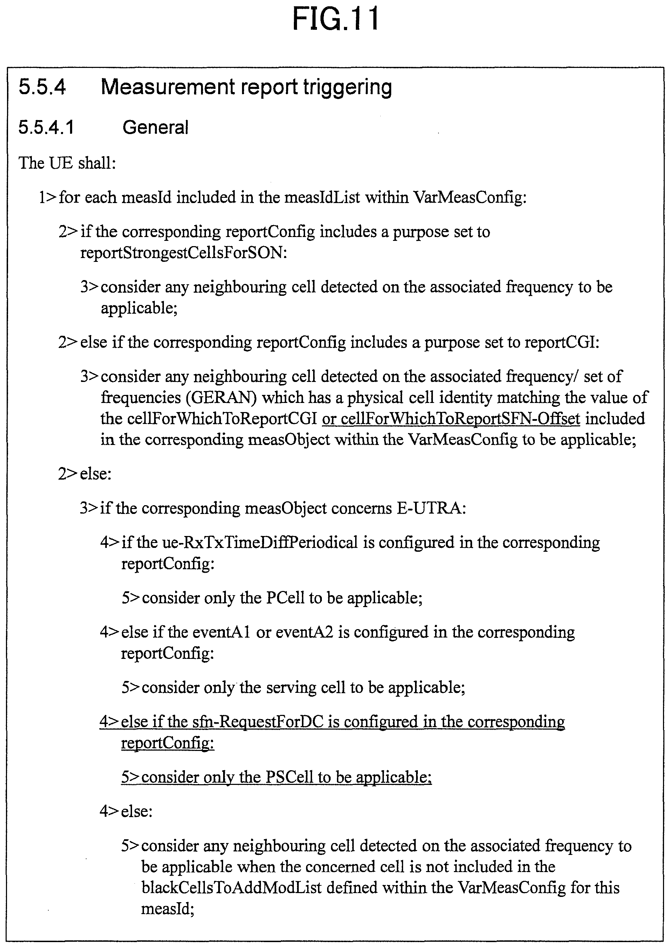

Fig. 11 shows a changed part in "5.5.4.1 General". The first underlined part indicates to consider a neighbor cell indicated by "cellForWhichToReportSFN-Offset" in a case where the purpose of the reportConfig is set as the reportCGI in the first embodiment. The second underlined part indicates to consider only a PSCell in a case where "sfn-RequestForDC" is set in the reportConfig when the purpose of the reportConfig is not the reportCGI or the like in the first and second embodiments.

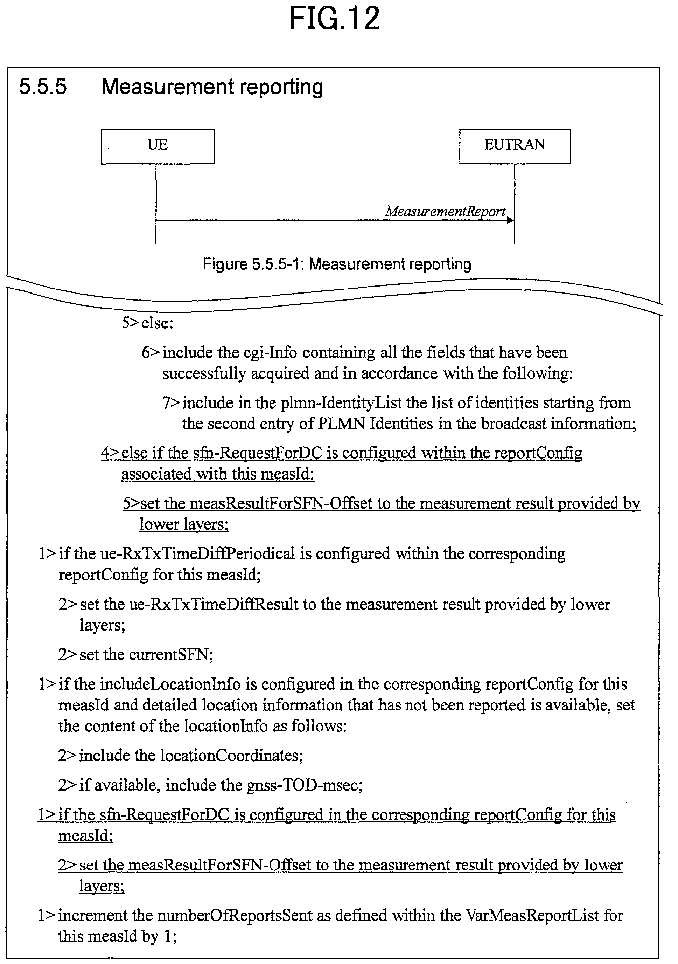

Fig. 12 shows a changed part of "5.5.5 Measurement reporting". The first underlined part indicates to set "measResultForSFN-Offset" in a measurement result when "sfn-RequestForDC" is set in the reportConfig in a case where the purpose is the reportCGI in the first embodiment. The second underlined part indicates to set "measResultForSFN-Offset" in a measurement result when "sfn-RequestForDC" is set in the reportConfig in the second embodiment.

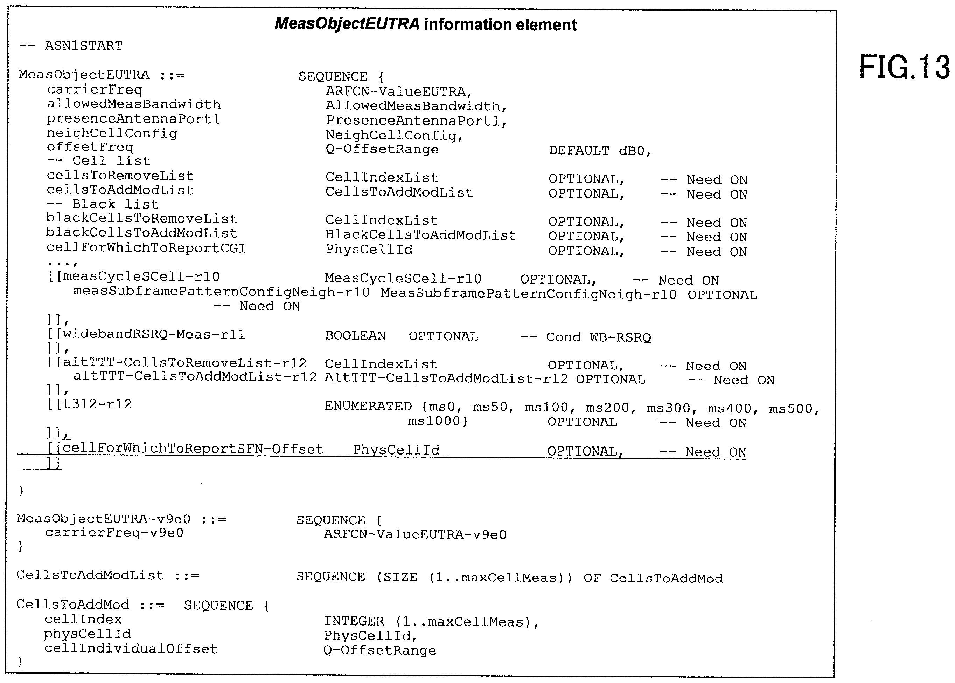

Fig. 13 indicates that "cellForWhichToReportSFN-Offset" is added for the first embodiment in "MeasObjectEUTRA information element".

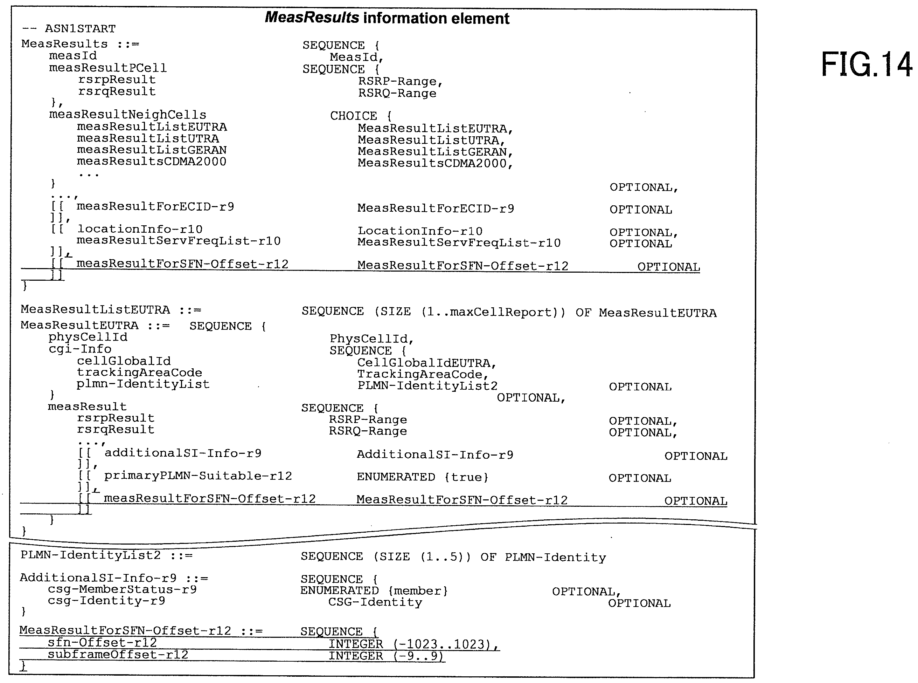

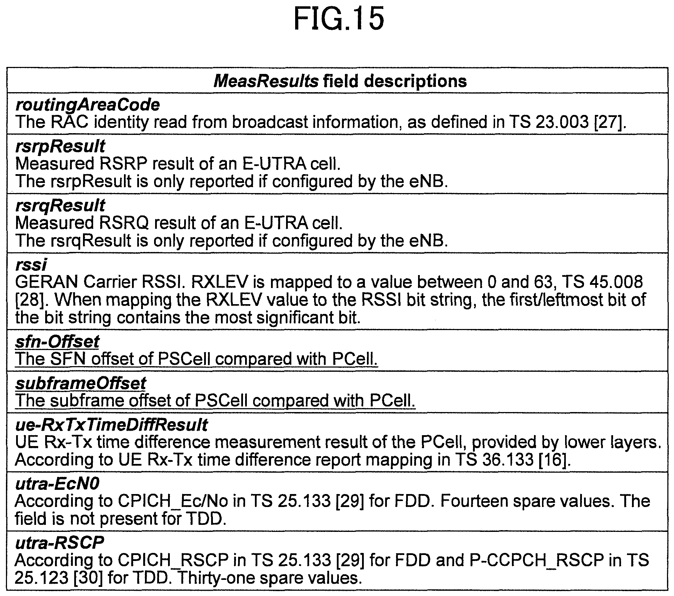

Fig. 14 shows a chanted part of "MeasResults information element". It indicates that "measResultForSFN-Offset-r12" is added for the first and the second embodiments. Fig. 15 shows that descriptions of sfn-Offset and subframeOffset are added to "MeasResults field descriptions".

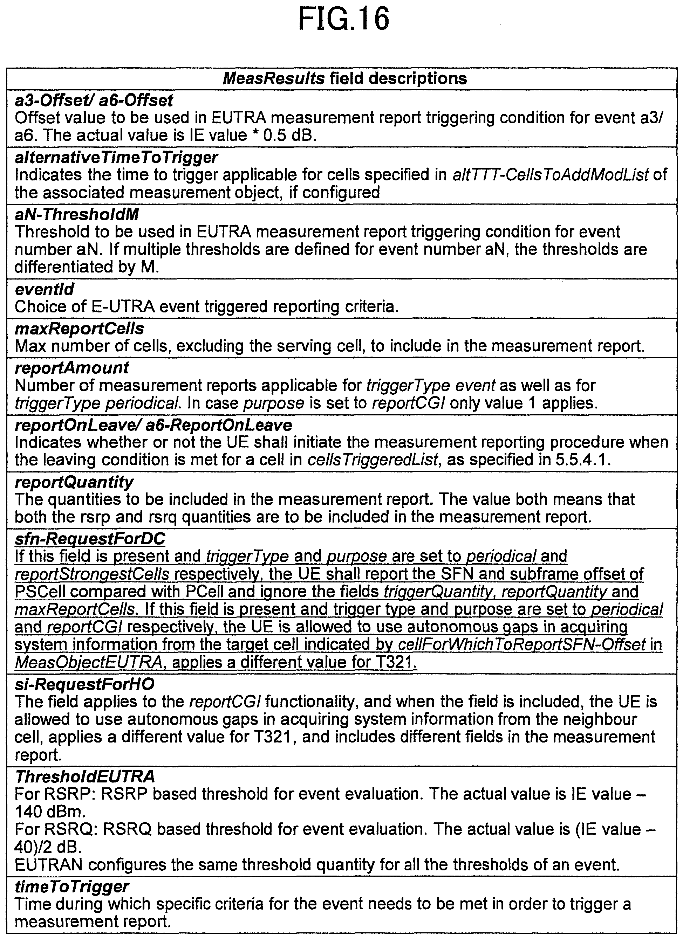

Fig. 16 shows that description of "sfn-RequestForDC" is added to "ReportConfigEUTRA field descriptions". As shown in Fig. 16, in the second embodiment, when "sfn-RequestForDC" exists in the ReportConfig, and triggerType and purpose are periodical and reportStrongestCells respectively, the user apparatus UE reports an SFN/subframe offset of PSCell compared with PCell.

As shown in Fig. 16, in the first embodiment, when "sfn-RequestForDC" exists in the ReportConfig, and triggerType and purpose are periodical and reportCGI respectively, the user apparatus UE autonomously configures a gap to obtain system information from a target cell indicated by "cellForWhichToReportSFN-Offset".

### (Apparatus configuration example)

### <Configuration example of user apparatus UE>

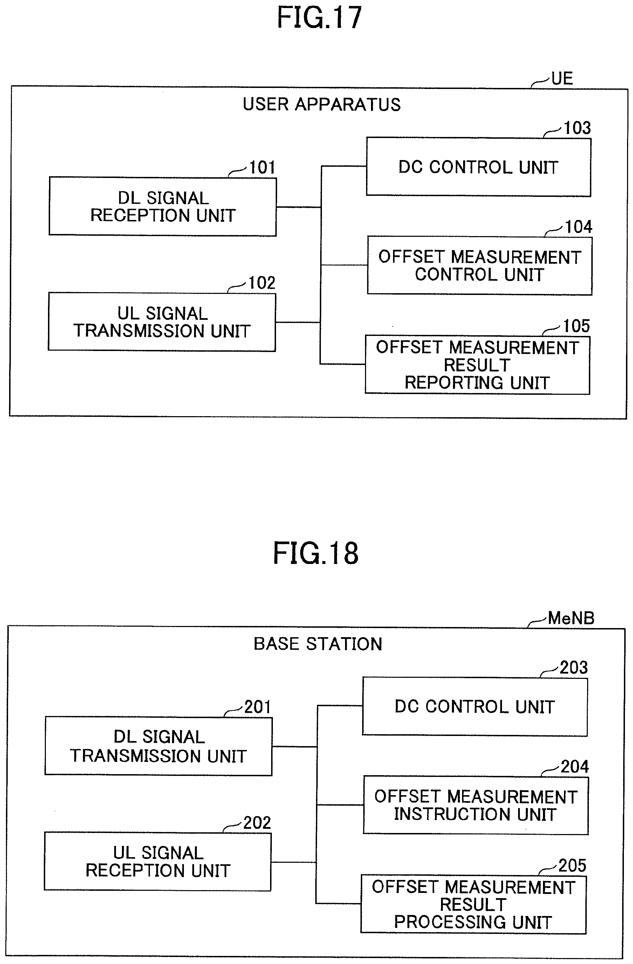

Fig. 17 shows a functional block diagram of the user apparatus UE of the present embodiment. As shown in Fig. 17, the user apparatus UE includes a DL signal reception unit 101, an UL signal transmission unit 102, a DC control unit 103, an offset measurement control unit 104 and an offset measurement result reporting unit 105. Fig. 17 only shows functional units especially related to the embodiment of the present invention in the user apparatus UE, and the user apparatus UE also includes at least functions, not shown in the figure, for performing operation complying with LTE. Also, the configuration shown in Fig. 17 is merely an example, and, any functional segmentations and any names of functional units can be used as long as the user apparatus UE can execute processing described in the present embodiment.

The DL signal reception unit 101 includes functions configured to receive various signals from the base station eNB (MeNB and the like) by radio and obtain a signal of an upper layer from the received physical layer signals. The UL signal transmission unit 102 includes functions configured to generate various signals of physical layer from an upper layer signal to be transmitted from the user apparatus UE, and transmit the signals by radio. Also, the DL signal reception unit 101 and the UL signal transmission unit 102 includes functions configured to perform DC communication based on configuration and the like by the DC control unit 103.

The DC control unit 103 performs processing of configuration/change/management and the like of DC based on configuration information from the base station eNB.

The offset measurement control unit 104 includes both of the offset measurement function described in the first embodiment and the offset measurement function described in the second embodiment. Alternatively, the offset measurement control unit 104 may include any one of the offset measurement function described in the first embodiment and the offset measurement function described in the second embodiment. In the first embodiment, the offset measurement control unit 104 measures an SFN/subframe offset between the target cell and the PCell based on RRCConnectionReconfiguration received from the base station eNB before DC is configured. In the second embodiment, the offset measurement control unit 104 measures an SFN/subframe offset between the PCell and the PSCell based on RRCConnectionReconfiguration received from the base station eNB in a state where communication of DC is performed.

The offset measurement result reporting unit 105 includes both of the offset reporting function described in the first embodiment and the offset reporting function described in the second embodiment. Alternatively, the offset measurement result reporting unit 105 may include any one of the offset reporting function described in the first embodiment and the offset reporting function described in the second embodiment. In the first embodiment, the offset measurement result reporting unit 105 reports, to the base station eNB, an SFN/subframe offset measured based on RRCConnectionReconfiguration received from the base station eNB before DC is configured. In the second embodiment, the offset measurement result reporting unit 105 reports, to the base station eNB, an SFN/subframe offset measured based on RRCConnectionReconfiguration received from the base station eNB when DC is configured.

### <Configuration example of base station eNB>

Fig. 18 shows a functional block diagram of a base station eNB (MeNB in the present embodiment) in the present embodiment. As shown in Fig. 18, the base station eNB includes a DL signal transmission unit 201, an UL signal reception unit 202, a DC control unit 203, an offset measurement instruction unit 204, and an offset measurement result processing unit 205. Fig. 18 only shows functional units especially related to the embodiment of the present invention in the base station eNB, and the base station eNB also includes at least functions, not shown in the figure, for performing operation as a base station in a mobile communication system complying with LTE. Also, the configuration shown in Fig. 18 is merely an example, and, any functional segmentations and any names of functional units can be used as long as the base station eNB can execute processing described in the present embodiment.

The DL signal transmission unit 202 includes functions configured to generate various signals of physical layer from an upper layer signal to be transmitted from the base station eNB, and transmit the signals by radio. The UL signal reception unit 202 includes functions configured to receive various signals from the user apparatus UE by radio and obtain a signal of an upper layer from the received physical layer signals. The DC control unit 203 performs processing of configuration/change/management and the like of DC.

The offset measurement instruction unit 204 includes both of the offset measurement instruction function described in the first embodiment and the offset measurement instruction function described in the second embodiment. Alternatively, the offset measurement instruction unit 204 may include any one of the offset measurement instruction function described in the first embodiment and the offset measurement instruction function described in the second embodiment. In the first embodiment, the offset measurement instruction unit 204 transmits, to the user apparatus UE, RRCConnectionReconfiguration including an offset measurement instruction and the like before DC is configured to the user apparatus UE. In the second embodiment, the offset measurement instruction unit 204 transmits, to the user apparatus UE, RRCConnectionReconfiguration including an offset measurement instruction and the like after DC is configured to the user apparatus UE.

The offset measurement result processing unit 205 includes both of a function for receiving an offset transmitted from the user apparatus UE by the method described in the first embodiment to perform processing using the offset and a function for receiving an offset transmitted from the user apparatus UE by the method described in the second embodiment to perform processing using the offset. Alternatively, the offset measurement result processing unit 205 may include any one of a function for receiving an offset transmitted from the user apparatus UE by the method described in the first embodiment to perform processing using the offset and a function for receiving an offset transmitted from the user apparatus UE by the method described in the second embodiment to perform processing using the offset.

In both cases of the first and the second embodiments, for example, the offset measurement result processing unit 205 performs operation and the like to generate configuration information by using the offset received from the user apparatus UE such that measurement gap/DRX of a timing that matches between the PCell and the PSCell is configured, and to transmit it to the user apparatus UE.

As described above, according to the present embodiment, there is provided a user apparatus including a function for performing communication with a plurality of base stations by dual connectivity, including:
measurement means configured, in a state where the user apparatus is not performing communication by the dual connectivity, to receive measurement configuration information, from a base station that forms a serving cell of the user apparatus, for instructing to report an offset indicating a difference between a radio frame in a measurement target cell and a radio frame in the serving cell, and to measure the offset according to the measurement configuration information; and
measurement reporting means configured to report the offset measured by the measurement means to the base station that forms the serving cell.

According to the above-mentioned configuration, it becomes possible that the user apparatus properly reports an offset between radio frames of a plurality of base stations to a base station.

The measurement configuration information includes, for example, instruction information instructing to report a cell global ID, and instruction information instructing to report the offset. By configured like this, offset measurement and reporting functions can be implemented to the user apparatus relatively easily.

Even when the measurement configuration information includes instruction information instructing to report the cell global ID, the user apparatus may obtain the offset without obtaining the cell global ID. According to this configuration, since an offset can be obtained without reading system information (SIB1), an offset can be reported more quickly.

The offset includes, for example, an offset between a system frame number in the measurement target cell and a system frame number in the serving cell, and an offset between a subframe in the measurement target cell and a subframe in the serving cell. According to this configuration, a difference of system fame number/subframe between a plurality of base stations can be ascertained, so that, for example, it becomes possible to properly set a measurement gap and/or DRX in DC.

Also, according to the present embodiment, there is provided a user apparatus including a function for performing communication with a plurality of base stations that includes a first base station and a second base station by dual connectivity, including:
measurement means configured, in a state where the user apparatus performs communication by the dual connectivity, to receive measurement configuration information, from the first base station, for instructing to report an offset indicating a difference between a radio frame in a cell formed by the first base station and a radio frame in a cell formed by the second base station, and to measure the offset according to the measurement configuration information; and
measurement reporting means configured to report the offset measured by the measurement means to the first base station.

According to the above-mentioned configuration, it becomes possible that the user apparatus properly reports an offset between radio frames of a plurality of base stations to a base station.

The measurement configuration information includes, for example, instruction information instructing to report a neighbor cell of high received power and instruction information instructing to report the offset. By configured like this, offset measurement and reporting functions can be implemented to the user apparatus relatively easily.

A cell formed by the first base station is a PCell, and a cell formed by the second base station is a PSCell, for example. According to this configuration, an offset between the PCell and the PSCell in DC can be obtained.

The offset includes, for example, an offset between a system frame number in a cell formed by the first base station and a system frame number in a cell formed by the second base station, and an offset between a subframe in a cell formed by the first base station and a subframe in a cell formed by the second base station. According to this configuration, a difference of system fame number/subframe between a plurality of base stations can be ascertained, so that, for example, it becomes possible to properly set a measurement gap and/or DRX in DC.

The functional configuration of the user apparatus UE described in the present embodiment may be realized, in the user apparatus UE including a CPU and a memory, by executing a program by the CPU (processor), or may be realized by hardware such as hardware circuits including logics of processing described in the present embodiment, or may be configured by coexistence of a program and hardware.

The functional configuration of the base station eNB described in the present embodiment may be realized, in the base station eNB including a CPU and a memory, by executing a program by the CPU (processor), or may be realized by hardware such as hardware circuits including logics of processing described in the present embodiment, or may be configured by coexistence of a program and hardware.

In the above, the embodiment of the present invention has been explained. However, the disclosed invention is not limited to the embodiment. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus UE and the base station eNB have been explained by using functional block diagrams. However, such an apparatus may be implemented in hardware, software, or a combination thereof.

Each of the software that operates by a processor provided in the user apparatus UE and the software that operates by a processor provided in the base station eNB according to an example of the present invention may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

### DESCRIPTION OF REFERENCE SIGNS

eNB, MeNB, SeNB base station
UE user apparatus
101 DL signal reception unit
102 UL signal transmission unit
103 DC control unit
104 offset measurement control unit
105 offset measurement result reporting unit
201 DL signal transmission unit
202 UL signal reception unit
203 DC control unit
204 offset measurement instruction unit
205 offset measurement result processing unit

## Claims

1. A user apparatus including a function for performing communication with a plurality of base stations that includes a first base station and a second base station by dual connectivity, comprising:
measurement means (104) configured, in a state where the user apparatus performs communication by the dual connectivity, to receive measurement configuration information, from the first base station, for instructing to report an offset indicating a difference between a radio frame in a cell formed by the first base station and a radio frame in a cell formed by the second base station, and to measure the offset according to the measurement configuration information; and
measurement reporting means (105) configured to report the offset measured by the measurement means to the first base station;
**characterized in that**:
the measurement configuration information is a 3GPP LTE based measurement configuration information having triggerType set to periodical and purpose set to reportStrongestCells respectively, and including sfn-RequestForDC.

2. The user apparatus as claimed in claim 1, wherein a cell formed by the first base station is a primary cell, PCell, and a cell formed by the second base station is a primary secondary cell, PSCell.

3. The user apparatus as claimed in any one of claims 1-2, wherein the offset includes an offset between a system frame number in a cell formed by the first base station and a system frame number in a cell formed by the second base station, and an offset between a subframe in a cell formed by the first base station and a subframe in a cell formed by the second base station.

4. An offset reporting method executed by a user apparatus including a function for performing communication with a plurality of base stations that includes a first base station and a second base station by dual connectivity, comprising:
a measurement step of, in a state where the user apparatus (UE) performs communication by the dual connectivity, receiving measurement configuration information, from the first base station, for instructing to report an offset indicating a difference between a radio frame in a cell formed by the first base station and a radio frame in a cell formed by the second base station, and measuring the offset according to the measurement configuration information; and
a measurement reporting step of reporting the offset measured by the measurement step to the first base station,
**characterized in that**:
the measurement configuration information is a 3GPP LTE based measurement configuration information having triggerType set to periodical and purpose set to reportStrongestCells respectively, and including sfn-RequestForDC.

## Patentansprüche

1. Benutzervorrichtung, die eine Funktion zur Durchführung von Kommunikation mit einer Vielzahl von Basisstationen, die eine erste Basisstation und eine zweite Basisstation beinhaltet, durch Dualanbindung beinhaltet, die umfasst:
Messmittel (104), die konfiguriert sind, um in einem Zustand, in dem die Benutzervorrichtung Kommunikation durch die Dualanbindung durchführt, eine Messkonfigurationsinformation von der ersten Basisstation zu empfangen, um die Meldung eines Versatzes anzuweisen, der auf eine Differenz zwischen einem Funkrahmen in einer Zelle, die durch die erste Basisstation gebildet wird, und einem Funkrahmen in einer Zelle, die durch die zweite Basisstation gebildet wird, hinweist, und um den Versatz entsprechend der Messkonfigurationsinformation zu messen; und
Messmeldemittel (105), die konfiguriert sind, um den durch die Messmittel gemessenen Versatz an die erste Basisstation zu melden;
**dadurch gekennzeichnet, dass**:
die Messkonfigurationsinformation eine 3GPP LTE-basierte Messkonfigurationsinformation ist, die einen Triggertyp aufweist, der jeweils auf periodisch eingestellt ist, und Zweck, der auf reportStrongestCells eingestellt ist, und sfn-RequestForDC beinhaltet.

2. Benutzervorrichtung nach Anspruch 1, wobei eine Zelle, die durch die erste Basisstation gebildet wird, eine primäre Zelle, PCell, ist und eine Zelle, die durch die zweite Basisstation gebildet wird, eine primäre sekundäre Zelle, PSCell, ist.

3. Benutzervorrichtung nach einem der Ansprüche 1 bis 2, wobei der Versatz einen Versatz zwischen einer Systemrahmennummer in einer Zelle, die durch die erste Basisstation gebildet wird, und einer Systemrahmennummer in einer Zelle, die durch die zweite Basisstation gebildet wird, und einen Versatz zwischen einem Teilrahmen in einer Zelle, die durch die erste Basisstation gebildet wird, und einem Teilrahmen in einer Zelle, die durch die zweite Basisstation gebildet wird, beinhaltet.

4. Versatzmeldeverfahren, das durch eine Benutzervorrichtung ausgeführt wird, die eine Funktion zur Durchführung einer Kommunikation mit einer Vielzahl von Basisstationen, die eine erste Basisstation und eine zweite Basisstation beinhaltet, durch Dualanbindung beinhaltet, das umfasst:
einen Messschritt des Empfangens, in einem Zustand, in dem die Benutzervorrichtung (UE) Kommunikation durch die Dualanbindung durchführt, einer Messkonfigurationsinformation von der ersten Basisstation, um die Meldung eines Versatzes anzuweisen, der auf eine Differenz zwischen einem Funkrahmen in einer Zelle, die durch die erste Basisstation gebildet wird, und einem Funkrahmen in einer Zelle, die durch die zweite Basisstation gebildet wird, hinweist und um den Versatz entsprechend der Messkonfigurationsinformation zu messen; und
einen Messmeldeschritt des Meldens des durch den Messschritt gemessenen Versatzes an die erste Basisstation,
**dadurch gekennzeichnet, dass**:
die Messkonfigurationsinformation eine 3GPP LTE-basierte Messkonfigurationsinformation ist, die einen Triggertyp aufweist, der jeweils auf periodisch eingestellt ist, und Zweck, der auf reportStrongestCells eingestellt ist, und sfn-RequestForDC beinhaltet.

## Revendications

1. Dispositif d'utilisateur incluant une fonction pour réaliser des communications avec une pluralité de stations de base qui inclut une première station de base et une seconde station de base par double connectivité, comprenant :
un moyen de mesure (104) configuré, dans un état où le dispositif d'utilisateur réalise des communications par la double connectivité, pour recevoir des informations de configuration de mesure, à partir de la première station de base, pour fournir une instruction servant à informer d'un décalage indiquant une différence entre une trame radio dans une cellule formée par la première station de base et une trame radio dans une cellule formée par la seconde station de base, et pour mesurer le décalage selon les informations de configuration de mesure ; et
un moyen de rapport de mesure (105) configuré pour informer la première station de base du décalage mesuré par le moyen de mesure ;
**caractérisé en ce que** :
les informations de configuration de mesure sont des informations de configuration de mesure basées sur la LTE du 3GPP ayant triggerType réglé sur périodique et l'objectif réglé sur reportStrongestCells respectivement, et incluant sfn-RequestForDC.

2. Dispositif d'utilisateur selon la revendication 1, dans lequel une cellule formée par la première station de base est une cellule primaire, PCell, et une cellule formée par la seconde station de base est une cellule secondaire primaire, PSCell.

3. Dispositif d'utilisateur selon l'une quelconque des revendications 1 et 2, dans lequel le décalage inclut un décalage entre un nombre de trames de système dans une cellule formée par la première station de base et un nombre de trames de système dans une cellule formée par la seconde station de base, et un décalage entre une sous-trame dans une cellule formée par la première station de base et une sous-trame dans une cellule formée par la seconde station de base.

4. Procédé de rapport de décalage exécuté par un dispositif d'utilisateur incluant une fonction pour réaliser des communications avec une pluralité de stations de base qui inclut une première station de base et une seconde station de base par double connectivité, comprenant :
une étape de mesure consistant à, dans un état où le dispositif d'utilisateur (UE) réalise des communications par la double connectivité, recevoir des informations de configuration de mesure, à partir de la première station de base, pour fournir une instruction servant à informer d'un décalage indiquant une différence entre une trame radio dans une cellule formée par la première station de base et une trame radio dans une cellule formée par la seconde station de base, et mesurer le décalage selon les informations de configuration de mesure ; et
une étape de rapport de mesure consistant à informer la première station de base du décalage mesuré par l'étape de mesure,
**caractérisé en ce que** :
les informations de configuration de mesure sont des informations de configuration de mesure basées sur la LTE du 3GPP ayant triggerType réglé sur périodique et l'objectif réglé sur reportStrongestCells respectivement, et incluant sfn-RequestForDC.
